# EUROPEAN PATENT SPECIFICATION

(11) **EP 2 641 844 B1**
(45) Date of publication and mention of the grant of the patent: **26.10.2016**
(21) Application number: 12160297.3
(22) Date of filing: 20.03.2012
(51) Int. Cl.: B65D 51/24, G09F 19/12, G09F 19/14

(54) **Decorative packaging element**
Dekoratives Verpackungselement
Élément décoratif d'emballage

(43) Date of publication of application: 25.09.2013
(73) Proprietor: Kraft Foods R & D, Inc., Deerfield, IL 60015 (US)
(72) Inventor: Ellenrieder, Michael, 80805 Munich (DE); Fritsch, Heiko-Herbert, 81541 Munich (DE)
(74) Representative: Boult Wade Tennant

(56) References cited:
- EP-A2- 1 006 055
- US-A- 5 839 592
- US-A1- 2003 121 189
- US-A1- 2004 166 258
- US-A1- 2006 283 749
- US-A1- 2008 019 029

## Description

### TECHNICAL FIELD

The present invention relates to a packaging element for a packaging unit of a food product and a method to produce such an element.

US 2004/166258 A, in particular its figure 8b, discloses such a packaging element which has the features of the preamble of claim 1. It also discloses an embossing step involving a substrate and a Fresnel lens sheet.

### TECHNICAL BACKGROUND

The food industry is a highly competitive business field with small and big companies competing on a local as well as on a global level. It is one of the characteristics of this industry that it offers a near endless variety of different products to the customer. In order to participate in the market, a company's products have to fulfil high quality standards. However, high quality products are nowadays only a prerequisite but in general not sufficient to commercially thrive. In other words, today's products do not only have to meet high quality standards but should provide an overall positive experience for the customer; this includes the presentation of the product.

Thus, in order to draw the customer's attention, one way forward is to present a product with an outstanding appearance. If today's customer is entering a food market, he or she will be exposed to multiple products from various brands. This is independent of the entered food section. This leads to the challenge for a food company to present its product so that the customer actually sees and recognizes them. Packaging is a way to solve this objective.

Although there are various ways to make products stand out by a special design of the packaging, the resulting costs may eventually lead to a product that is not able to compete with other products on a price level. Thus, it is important to provide an appealing packaging to a food product at a low cost. Nonetheless, under special circumstances higher costs can be justifiable, for example, in case of special occasions or a special promotion for a product. In any case, providing a high quality food product together with an outstanding packaging will at least help the customer to recognize or to perceive the product and could therefore serve as one of the pillars for commercial success. As a consequence, food companies offer their food products not only in a high variety but on top always try to find new ways to present these products in an eye-catching manner for getting the customer's attention.

One way of doing this is to include optical effects such as a lenticular lens when designing packaging of a food product. However, lenticular lenses have to be handled with care during the production process. This normally results in the use of lenticular lenses in a preferably flat or slightly arcuate configuration. For example, US 2002/0079281 A1 discloses a dispensing package closure having a lenticular lens assembly incorporating a retaining member with a rim portion. The rim portion extends annularly inward from the bend to secure the lens to a top surface of the closure. Thus, the lenticular lens is secured in the closure by a frame. The rim portion extends annularly inward from the bend to secure the lens to a top surface of the closure. Thus, the flat or slightly arcuate lenticular lens is secured in the closure by a frame. However, assembling the closure and the lenticular lens incurs additional costs due to the assembly step and the need for multiple parts. In addition, mounting the lenticular lens in the closure requires the production of a frame with a precision high enough to prevent the lenticular lens from moving inside the frame, which may leave a rather shabby impression with a customer.

Although there have been attempts to use lenticular lenses in three dimensional shapes, these trials have been restricted to continuous shapes such as a frustoconical shape which have been made from planar sheets of material. For example US 2007/0024980 A1 discloses a frustoconical shape to form an article such as a container. The article includes a lenticular sidewall, which defines a cavity having a top end, and a bottom end, the sidewall having a seam as well as an optional base attached to the bottom end of the sidewall. The lenticular sidewall forms the frustoconical shape of the article with a seam joining opposite ends. Another embodiment of the article disclosed in US 2007/0024980 A1 is a baseless tube.

The first mentioned US 2004/0166258 A1 discloses a film having a locally embossed Fresnel lens that is placed adjacent a design to create a three-dimensional image. The film can be used separately of laminated to a substrate to create enclosures such as cartons, dispensers or containers. Another decorative element producing a graphical image is described in US 2008/0019029 A1.

### SUMMARY OF THE INVENTION

Thus, the objective of the present invention was to provide a packaging unit for a food product that allows for an appealing presentation. It is a further objective of the present invention to provide such a packaging unit at a low cost by facilitating the production process of said packaging unit.

Accordingly, the present invention provides a packaging element for a packaging unit of a food product as defined in independent claim 1, a method defined in independent claim 7 to produce a packaging element and a packaging unit according to Claim 15 which comprises at least one packaging element according to the invention.

More specifically, the present invention provides a packaging element for a packaging unit of a food product comprising a back side, a front side, and a lenticular sheet including an at least semi-transparent layer with a back surface, and a front surface forming a lenticular lens and constituting at least a part of the front side of the packaging element. Further, the packaging element comprises a decorated layer at least partly covering the back surface of the at least semi-transparent layer and being visible through the at least semi-transparent layer. Further, the packaging element has a central portion, a circumferential channel in the back side of the packaging element which forms a protrusion in the front side which protrudes relative to and at least partly surrounds the central portion. The decorated layer at least partly extends into the channel.

Consequently, the packaging element according to the invention advantageously provides an appealing optical effect by utilizing a lenticular sheet forming a lenticular lens as part of the packaging element. The application of a decorated layer that at least partly covers the back surface of the at least semi-transparent layer provides a high flexibility concerning the decoration of the packaging element. For example, the decorated layer may well be adapted for use with different products. It may comprise information about the product, regulatory information, the producer, picture elements, promotional information and/or relate to a special occasion. In this manner, it is also possible to increase the density of information on the package, i. e. the amount of information on the packaging element. For example, a first information may be visible when the packaging element is viewed from a first angle and a second information may be visible when it is viewed from a second angle. Further, the lenticular sheet has a protrusion and/or depression and therefore allows the packaging element to adapt complex geometrical shapes, consisting of a combination of basic geometric elements that are required for the design of a packaging element. In addition, the decorated layer at least partly extending into the protrusion and/or depression of the lenticular sheet allows for an advantageous optical effect being present in any section of the packaging element. Since the packaging element may be integrally formed, it is provided at a low cost without the need of an assembly step.

The lenticular sheet may form the core of the packaging element. The at least semi-transparent layer may provide an additional and/or complementary optical effect to the optical effect caused by the decorated layer and the lenticular sheet, further increasing the flexibility in terms of appearance of the packaging element.

The optical effect is mainly visible when looking at the front side of the packaging element. However, the back side may also be provided with such an optical effect, especially if the back side of the packaging element is visible for sale or becomes visible when the packaging element is used, for example when opening the packaging element. Preferably, the protrusion and/or depression of the lenticular sheet is caused by deforming the lenticular sheet at least locally by an angle α. This angle of bending or deformation is preferably at least 15°, more preferably 30°, 45°, 60° or 90°. The decorated layer may be provided directly on the back surface of the at least semi-transparent layer, for example by printing. On the other hand, the decorated layer may at least be partly provided as an individual layer attached to the back surface of the at least semi-transparent layer.

In another embodiment of the present invention, the at least semi-transparent layer constitutes the structural material of the packaging element.

This embodiment has the advantage that no further layer and/or element providing the necessary structural strength to the packaging element is needed. Consequently, such a design facilitates the production of the packaging element with reduced complexity leading to cost savings. It may also or alternatively allow for providing a light design for the packaging element, saving transportation costs during its life cycle. This embodiment, in particular if combined with an imprinted decorated layer, provides an integrally formed packaging element that may have a complex shape and at the same time provides an advantageous optical effect due to the lenticular lens.

The circumferential channel has the advantage that it serves as a functional element of the packaging element. For example, a circumferential ridge can be used to keep the food product inside the circumferential ridge. The circumferential ridge and/or the channel may be used for stapling the packaging elements, serve as a coupling element to other packaging elements of the same or any other shape and/or represent a cover and/or container of a packaging unit. The channel (groove) may have a depth extending towards the interior and/or exterior of the packaging element. The term interior refers to the side of the packaging element, where the food product will be situated after being at least partly packed by the packaging element.

Making a circumferential ridge and/or a channel an integral part of a packaging element can on one hand increase the functionality of the packaging element and on the other hand provides optical effects to catch the attention of the customer or may provide the customer with additional information.

The ridge and/or channel may also be designed to form part or all of a connection arrangement. The connection arrangement may be based on mechanical and/or frictional effects. In a mechanical connection arrangement, the packaging element is coupled to at least one other packaging element using elastic properties An example for such a mechanical connection arrangement is a snap-on connection arrangement. On the other hand, a frictional connection arrangement is mainly based on the interaction of two surfaces so that packaging elements are coupled by a clamping connection. Either or both of these connection arrangements may also be applied to an integrated packaging element, e. g. a packaging element comprising a base and a cover connected by a hinge, such as a living hinge. In this way, the two portions of the same packaging element are pivotable in respect to each other and can be connected by applying said connection arrangement.

In a preferred embodiment of the present invention, the packaging element is a container and/or a cover.

This embodiment has the advantage that its design as a container and/or cover combines the optical effects of such a packaging element with its functional purpose, such as delivering a food product to a customer and/or protecting the food product from the environment.

In another embodiment of the present invention, the packaging element further comprises a protective layer being situated on a back surface of the decorated layer, wherein the protective layer is configured to protect the decorated layer during forming of the packaging element by being configured to prevent relative movement between the decorated layer and the lenticular sheet.

Such a configuration has the advantage that the durability of the decorated layer may be increased, thus saving costs. Further, decorated layers may be used that simply cannot be provided with a durability that resists damages during forming of the packaging element. In any case, the protective layer prevents damages to the decorated layer during the production of the packaging element as well as during transportation or handling by the customer. This is achieved by the protective layer at least partly taking over the relative movement occurring during the forming of the packaging element.

The protective layer of the present invention may be an integral part of the packaging element but may also be provided as a separate sheet. Further, the protective layer may also at least partly connect to the packaging element and/or to another packaging element of the packaging unit, preferably providing a seal to protect the food product from being exposed to the environment to increase shelf life. The protective layer may also seal and/or connect to another packaging element of the packaging unit when being an integral part of the packaging element.

In another embodiment of the present invention, the transparent layer is made of a thermoformable polymer, preferably PP and/or PET.

Polypropylene (PP) and/or Polyethylene Terephthalate (PET) has the advantage that it is a material commonly used in the food industry and thus its properties are well known. The material can further be provided semi-transparent or fully transparent. Further, this material is available in various different colours that may provide an additional desired optical effect that contributes to the appealing and outstanding appearance of the packaging element.

In another embodiment of the present invention, the protrusion of the packaging element forms a topographical feature that is adapted to be coupled to another packaging element, preferably based on a mechanical and/or frictional connection.

Such a topographical feature has the advantage that the packaging element according to this invention can be easily coupled to a second packaging element to form a packaging unit for storing a food product. The second packaging element may also be a packaging element according to this invention comprising a lenticular sheet but can also be any other packaging element for packaging or storing a food product known to the skilled person. The topographical feature comprises the aforementioned channel but can in generally be situated anywhere on the packaging element. Preferably, the topographical feature is designed to be detachable so as to allow a repeated coupling and decoupling of the packaging elements. Another option is to use the topographical feature to couple the packaging element to a second packaging element that belongs to a different packaging unit or a different packaging compartment holding another food product.

The present invention also provides a method to produce a packaging element comprising the steps defined in claim 7.

This method allows to produce a packaging element according to the invention in a fast and efficient production process. In this respect, forming of the packaging element may well be done in one step. The result of this production process is an integral packaging element for a food product without the necessity for additional assembly and/or gluing.

Further, to the surprise of the inventors, forming the lenticular material did not cause undesirable effects concerning the properties of the lenticular material. The lenticular material still had similar (if not the same) optical qualities as before forming without significant distortion. In particular, the central portion of the packaging element's lenticular material did not distort.

In order to enhance the bond between the layers, glue may be applied in between the layers. However, it may well be sufficient that the different layers of material stick to each other due to their inherent properties and the applied treatment during the production process, such as the application of heat during forming. By creating the at least one protrusion and/or depression by plastic deformation of both the transparent layer and the decorated layer avoids the risk of a misfit if the layers were deformed separately and then had to be combined afterwards. The forming process itself may be complemented by the application of heat to make the material more ductile when forming the packaging element. However, this is by no means obligatory.

In another embodiment, the method includes the application of a permanent or removable protective layer to the back surface of the decorated layer prior forming the at least one protrusion and/or depression to prevent the transparent layer and the decorated layer from cracking.

Using a permanent or removable protective layer prevents the transparent layer and the decorated layer from getting damaged during the formation of the packaging element. Thus, cracking of the decorated layer can not cause undesired defects of the packaging element that may well be hard to spot during quality control and would need extra quality control equipment incurring undesired extra costs. Consequently, the decorated layer prevents imperfections in the packaging element from occurring, which might also compromise the appealing optical effect the packaging element is supposed to provide to the customer.

The protective layer may further be configured to fulfil additional functions such as being a seal for the packaging element to protect the food product from the environment. If the protective layer is removable and is removed after production of the packaging element, this layer is preferably configured to be reusable. In any case, the protective layer prevents that the decorated layer slides over the mould's surface while being deformed. This also reduces the risk that particles of previous decorated layers left on the mould can not result in undesired impurities or imperfections of the subsequently produced packaging elements produced.

In another embodiment, a layer of lacquer is applied to the back surface of the decorated layer to form the protective layer.

A protective layer applied with this technique avoids a misplacement of the protective layer prior and during the formation of the at least one protrusion and/or depression. In other words, the layer of lacquer facilitates a more reliable production process with a reduced risk of production defects. Nonetheless, the protective layer is able to provide the same advantages as the above mentioned embodiment.

In another embodiment of the present invention, the method comprises a step of extruding the lenticular sheet.

The extrusion of a lenticular sheet has the advantage of a cost efficient and fast production of such a sheet that can subsequently be formed into a packaging element. Preferably, this step is performed inline so that no intermediate storage facilities are necessary. However, if different lenticular sheets are used to produce a packaging element according to the invention, it can also be advantageous to solely or additionally provide the means to use a prefabricated lenticular sheet for the production process.

In another embodiment, the decorated layer is applied by printing.

Printing the decorated layer onto the semi-transparent layer or alternatively on a separate layer that is afterwards combined with a semi transparent layer has the advantage that a change of the decoration for the packaging element is easily feasible. Further, applying the decorated layer by printing a decoration on the semi-transparent layer avoids a misalignment between the transparent layer and the decorated layer of the packaging element. Nonetheless, in both cases it is possible to highly individualize the decoration formed on the packaging element. This may even be practiced up to a degree of printing different promotion codes onto the packaging elements. More likely, this technique may be used to acquire packaging elements with individualized designs for different food products.

In another embodiment of the present invention, the method further comprises a step of cutting the packaging unit.

Cutting the packaging element assures a shape of the packaging element with a high uniformity since it allows it removes undesired deformations during the formation of the packaging element's shape. If not already obtained after forming, the different layers of the packaging element can be cut to have a common edge without any of the layers protruding from another layer. In other words, imperfections due to the forming process of the packaging element can easily be removed.

Naturally, it is also possible to cut multiple layers to different lengths if this is required by the design of the packaging element. This may for example be the case, if the decorated layer only partly extends into the protrusion and/or depression of the lenticular sheet.

In another embodiment, the production steps of extruding the lenticular sheet, applying the protective layer, forming the at least one protrusion and/or depression is at least partly performed by an inline production process.

Utilizing an inline production process has the advantage of a fast automated and efficient production of the packaging element. No interaction of personnel nor any intermediate storage facilities are required. The inline production process may also include the packaging of a food product using the packaging element according to this invention.

In another embodiment, the packaging element is produced by thermoforming.

Applying thermoforming technology to form the packaging element has the advantage to facilitate the formation of the protrusion, depression, channel and/or ridge. For thermoforming, the lenticular material is heated to a temperature causing the material to be pliable. This may be done before and/or after the lenticular material is placed in the mould. Thus, the material can easily be adapted to the shape of the mould and larger deformations can be achieved without causing damage to the material of the packaging element. Preferably, forming is achieved by means of a vacuum to avoid scratches to the outer surface of the packaging element.

The invention also provides a packaging unit with a food product, comprising a packaging element according to claims 1 to 6.

A packaging unit comprising a packaging element according to this invention and accommodating a food product is able to successfully draw the attention of a customer by its optical appeal. Thus, a customer is more likely to make a purchase decision increasing the commercial success of the product. Preferably, the food product is a savoury, dairy and/or confectionary product.

### BRIEF DESCRIPTION OF THE DRAWINGS

The following drawings provide exemplary embodiments of the present invention. Identical reference signs refer to features having the same or a similar function and/or serving the same objective. Same reference signs may also refer to equal or similar elements.
Figure 1 shows a top view of a packaging element according to the present invention.
Figure 2 shows a cross section of an exemplary embodiment of the present invention along line A of Figure 1 together with a magnetized view, showing the different layers of the packaging element.
Figure 3 (a), (b), and (c) shows a packaging element according to the invention from three different angles in order to show the appealing optical effect that is achieved by a decorated layer in combination with a lenticular sheet.
Figure 4 shows the detailed area A of figure 3 (b).

### DETAILED DESCRIPTION OF PREFERRED EMBODIMENTS

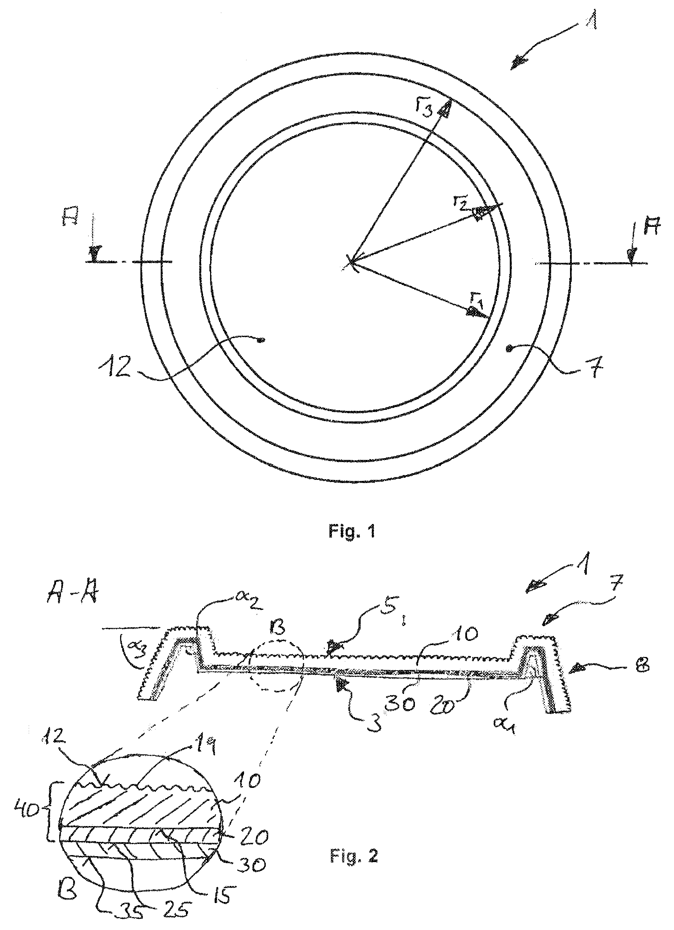

Figure 1 shows a preferred embodiment of a packaging element 1 according to the present invention. More specifically, figure 1 shows a top view of a packaging element which is designed to be a cover. The cover in this embodiment has a circular shape. Naturally, other geometrical shapes may well be used to form the packaging element 1.

The central part of the packaging element 1 has a flat configuration but may also be slightly bulging. The lenticular sheet 40 is formed by a semi-transparent layer 10 and a decorated layer 20. Before the outer circumferential edge of the packaging element 1, the lenticular sheet 40 protrudes at a radius r₁ in the direction of the front surface 12 of the lenticular sheet 30 by an angle α₁ (figure 2). More towards the edge at a radius r₂, the lenticular sheet 40 is bending by an angle α₂ opposite to α₁ so that the protrusion 7 has a portion basically running parallel to the central part. Close to the circumferential edge at a radius r₃, the lenticular sheet 30 is redirected downwards by an angle α₃ so that the circumference of the packaging element 1 points away from the back side 3. Further, although protruding after the first bending angle α₁, after the third bend by the angle α₃, the circumferential edge passes beyond the plane defined by the central part of the packaging element.

As shown in figure 2, the edges at radii r₁, r₂ and r₃ form a topographical feature at the circumference of the packaging element 1 comprising a channel 7 and a ridge 8. The depth of the channel 7 extends to the front side 5 of the packaging element 1. On the other hand, the ridge 8 is extending the peripheral wall of the channel in the direction of the back side 3 beyond the plane defined by the generally flat section of packaging element 1 inside the region defined by the circle having the radius r₁.

Concerning the different layers of packaging element 1 (figure 2: magnified area B), it can be seen that at the front side 5 of the packaging element 1 a semi-transparent layer 10 is present. On its front surface 12, the semi-transparent layer 10 is formed as a lenticular lens with a characteristic surface pattern 19. On the back surface 15 of the semi-transparent layer 10 there is a decorated layer 20 that is visible through the semi-transparent layer 10. The interaction between the semi-transparent layer 10 and the decorated layer 20 causes an appealing optical effect to a user by looking at the front surface of the semi-transparent layer 10 from different angles.

In the exemplary embodiment shown in figure 2, there is also a protective layer 30 situated on the back surface 25 of the decorated layer 20. Consequently, the back surface 35 of the protective layer 30 forms the back side 3 of the packaging element 1. However, it is also possible that the back surface 25 of the decorated layer 20 is forming the back side 3 of the packaging element 1, i. e. no protective layer 30 has been applied or has only been applied as an intermediate measure during production or has been removed after opening the packaging unit of which the packaging element 1 is a part of.

The decorated layer 20 may be formed by a separate layer, for example a pre-printed sheet, but is preferably directly printed onto the back surface 15 of the semi-transparent layer 10. In the former case, the pre-printed sheet may at the same time serve as a protective layer 30. In other words, in this configuration, the pre-printed sheet makes an additional protective layer 30 unnecessary.

In the present example, the decorated layer 20 extends over the whole back surface 15 of the semi-transparent layer 10. However, it is also possible that the decorated layer 20 only partly covers the back surface 15 of the semi-transparent layer 10. In any case, if a protective layer 30 is present, it preferably covers at least the area defined by the decorated layer 20 although preferably, the protective layer 30 covers the whole back surface 15 of the semi-transparent layer 20. In all these configurations, scratches and other imperfections are prevented from occurring during the formation of the protrusion and/or depression 7. During the production process, heat and/or glue may be used to form the multi layer configuration of the packaging element 1.

During production, multiple packaging elements 1 may be produced simultaneously, for example in the form of an array from which the individual packaging elements or groups of packaging elements are cut out, preferably after having received the desired shape. Forming the desired shape as well as cutting out the packaging element 1 or a group of packaging elements 1 can be performed in the same production step.

In any of the aforementioned configurations, a packaging element 1 obtains a desired shape and provides an optical effect, over at least parts of the front side 5 of the packaging element 1. If desired, this optical effect can even partly extend to the back side 3 of the packaging element 1.

Consequently, the advantage of a packaging element 1 according to the present invention is that even in case of high bending angles αᵢ, an appealing optical effect caused by the interaction of the decorated layer 20 and the semi-transparent layer 10 can be maintained throughout the deformed sections of the packaging element 1.

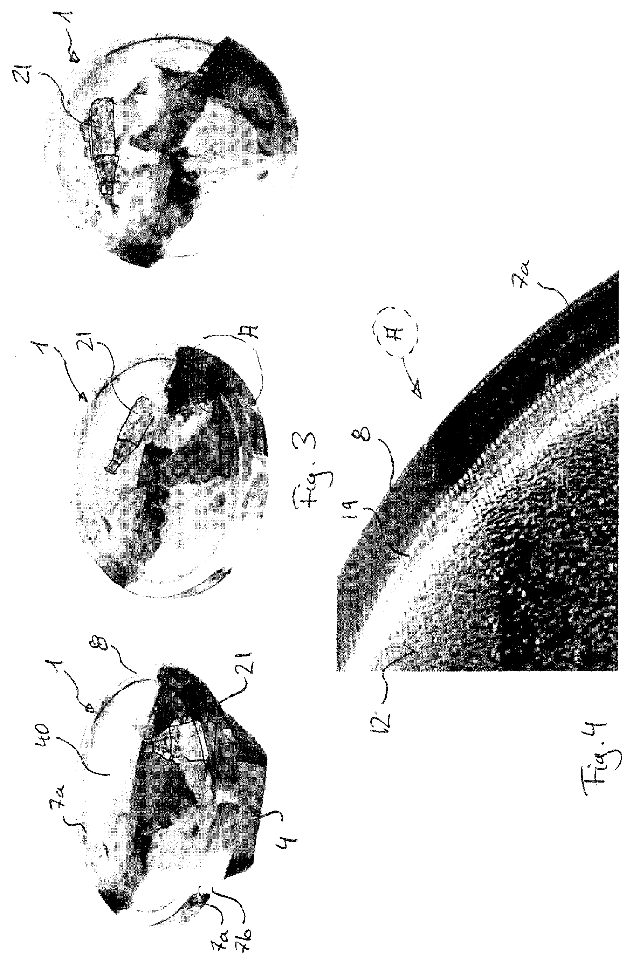

Figure 3 illustrates a packaging element 1 according to the present invention with a front surface 12 looked at from three different angles. Similar to the packaging element 1 shown in figure 1, the packaging element 1 is designed as a cover or lid that covers another packaging element 4 that is formed as a container to accommodate a food product. Combined, the packing elements 1 and 4 form a packaging unit.

The cover 1 is formed by a lenticular sheet 40 that is in turn constituted by a decorated layer 20 that lies beneath an at least semi-transparent layer 10 (as seen from the outside of the packaging element 1). Within its central portion, the lenticular sheet 40 is a basically flat circular area. However, this area may slightly bulge or have protrusions and/or depressions 7. The cover comprises a topographical feature in the peripheral area of said cover 1. The topographical feature is constituted by a protrusion 7a in respect to the central area, a circumferential ridge 8, another protrusion 7a directly adjacent to a depression 7b reaching below the central area of the packaging element 1 (as seen from the center of the cover 1 to the peripheral edge). The topographical feature is configured to interact with container 4. More specifically, cover 1 fits onto container 4 by engaging the topographical feature at the peripheral edge of the cover 1 with a circumferential edge of container 4, resulting in a packaging unit.

The front surface of the semi-transparent layer 12 is produced as a lenticular lens 19 that comprises the characteristic surface pattern, which is configured to create the appealing optical effect described below. Cover 1 in figure 3 has a graphical element 21. Depending on the view angle, the graphical feature 21 appears at different locations on the surface 12 of cover 1. This creates the appealing optical effect of a movement in the eye of a beholder.

More specifically, in figure 3(a), the graphical element 21 is situated at the peripheral edge of cover 1. Moreover, the graphical element extends from the central flat surface of the lenticular sheet 40 throughout the first protrusion 7a, the ridge 8, the second protrusion 7a and ends in at the outer circumferential surface of cover 1 within protrusion 7b. As illustrated in figures 3(b) and 3(c), the graphical element 21 changes its location and is now situated in the central basically flat area of cover 1. As a result, cover 1 creates the visual effect of the graphical element 21 moving along the surface of the lenticular sheet 40. In other words, the lenticular sheet 40 that forms the packaging element 1 is designed to cause an optical illusion in the eye of the beholder and at the same time constitutes a structural element of packaging unit. As demonstrated in figure 3, this optical effect may extend over the whole visible surface of the packing element 1 despite a significant deformation of lenticular sheet 40, that is preferably performed by thermoforming.

Figure 4 shows the magnified area A indicated in figure 3(b). Here, the front surface 12 of the semi-transparent layer 10 is clearly visible and shows the alternating wavy pattern of the lenticular lens 19. Further, it can be seen, how this characteristic surface pattern extends over protrusion 7a and along ridge 8. This is the reason for the visual effect being present in portions of packaging element 1, which have been significantly deformed, for example by at least one of the aforementioned angles α.

Consequently, a packaging element 1 according to the present invention offers among others the advantage of an appealing optical effect throughout its whole visible surface 12. At the same time, this effect is achieved in a cost efficient way since the material, i. e. the lenticular sheet, responsible for the optical effect, also forms the packaging element itself. In other words, it is a structural element of a packaging unit 4.

## Claims

1. A packaging element (1) for a packaging unit (4) of a food product, comprising:
a back side (3);
a front side (5); and
a lenticular sheet (40), including an at least semi-transparent layer (10) having a front surface (12), which forms a lenticular lens (19) and constitutes at least a part of the front side of the packaging element, and a back surface (15); and
a decorated layer (20) at least partly covering the back surface (15) of the at least semi-transparent layer and being visible through the at least semi-transparent layer;
**characterised in that** the packaging element (1) has a central portion, a circumferential channel (7) in the back side (3) of the packaging element (1) which forms a protrusion in the front side (5) which protrudes relative to and at least partly surrounds the central portion(7); and
**in that** the decorated layer (40)at least partly extends into the channel (7).

2. The packaging element according to claim 1, wherein the transparent layer (10) constitutes the structural material of the packaging element (1).

3. The packaging element according to one of the preceding claims, wherein the packaging element (1) is a container and/or a cover.

4. The packaging element according to one of the preceding claims, further comprising a protective layer (30), being situated on a back surface (25) of the decorated layer (20) configured to protect the decorated layer during forming and to prevent relative movement between the decorated layer and the lenticular sheet (40).

5. The packaging element according to one of the preceding claims, wherein the transparent layer (10) is made of a thermoformable polymer, preferably PP and/or PET.

6. The packaging element according to one of the preceding claims, wherein the protrusion and/or channel (7) forms a topographical feature that is adapted to be coupled to another packaging element, preferably based on a mechanical and/or frictional connection.

7. A method to produce a packaging element (1), comprising the steps of:
- placing a lenticular material (40) including a transparent (10) and a decorated layer (20) on a mould so that a back surface (25) of the decorated layer of the lenticular material faces the forming part of the mould; and
- forming at least one circumferential channel (7) and a protrusion (8) protruding relative to and at least partly surrounding a central section by plastically deforming the transparent layer together with the decorated layer such that said decorated layer at least partly extends into the channel.

8. The method according to claim 7, wherein a permanent or removable protective layer (30) is applied to the back surface (25) of the decorated layer (20) prior to forming the at least one protrusion (8) and channel (7) to prevent the transparent layer (10) and the decorated layer (20) from cracking.

9. The method according to claim 8, wherein a layer of lacquer is applied to form the protective layer (30).

10. The method according to one of the claims 7 to 9, further comprising a step of extruding the lenticular sheet (40).

11. The method according to one of the claims 7 to 10, wherein the decorated layer (20) is applied by printing.

12. The method according to one of the claims 7 to 11, further comprising a step of cutting the packaging element (1).

13. The method according to claims 7 to 12, wherein the production steps of extruding the lenticular sheet (40), applying the decorated layer (20), applying a protective layer (30), forming the at least one protrusion and/or channel (7) is at least partly performed by an inline production process.

14. The method according to claims 7 to 13, wherein the packaging element (1) is produced by thermoforming.

15. A packaging unit (4) with a food product, comprising at least one packaging element (1) according to claims 1 to 6.

## Patentansprüche

1. Verpackungselement (1) für eine Verpackungseinheit (4) eines Lebensmittelprodukts, wobei das Verpackungselement Folgendes umfasst:
eine Rückseite (3);
eine Vorderseite (5); und
eine Lentikularfolie (40) einschließlich einer zumindest halbtransparenten Schicht (10) mit einer vorderen Oberfläche (12), die eine Lentikularlinse (19) bildet und zumindest einen Teil der Vorderseite des Verpackungselements darstellt, und einer Rückfläche (15); und
einer verzierten Schicht (20), die zumindest teilweise die rückwärtige Oberfläche (15) der zumindest halbtransparenten Schicht abdeckt und durch die zumindest halbtransparente Schicht sichtbar ist;
**dadurch gekennzeichnet, dass** das Verpackungselement (1) einen Mittelabschnitt, einen Umfangskanal (7) in der Rückseite (3) des Verpackungselements (1), der einen Vorsprung in der Vorderseite (5)bildet, der im Verhältnis zu dem Mittelabschnitt (7) herausragt und diesen zumindest teilweise umgibt, aufweist; und
**dadurch, dass** sich die verzierte Schicht (40) zumindest teilweise in den Kanal (7) erstreckt.

2. Verpackungselement nach Anspruch 1, wobei die transparente Schicht (10) das Strukturmaterial des Verpackungselements (1) darstellt.

3. Verpackungselement nach einem der vorstehenden Ansprüche, wobei das Verpackungselement (1) ein Behälter und/oder eine Abdeckung ist.

4. Verpackungselement nach einem der vorstehenden Ansprüche, das ferner eine Schutzschicht (30) umfasst und sich auf einer rückwärtigen Oberfläche (25) der verzierten Schicht (20) befindet, die so konfiguriert ist, dass sie die verzierte Schicht während des Formens schützt und eine relative Bewegung zwischen der verzierten Schicht und der Lentikularfolie (40) verhindert.

5. Verpackungselement nach einem der vorstehenden Ansprüche, wobei die transparente Schicht (10) aus einem thermoverformbaren Polymer hergestellt ist, vorzugsweise PP und/oder PET.

6. Verpackungselement nach einem der vorstehenden Ansprüche, wobei der Vorsprung und/oder Kanal (7) ein topographisches Merkmal bildet, das so ausgelegt ist, dass es mit einem anderen Verpackungselement verbunden werden kann, vorzugsweise basierend auf einer mechanischen Verbindung und/oder Reibschluss.

7. Verfahren zur Herstellung eines Verpackungselements (1), das folgende Schritte umfasst:
- das Geben des Lentikularmaterials (40) einschließlich einer transparenten (10) und einer verzierten Schicht (20) auf eine Form, so dass eine rückwärtige Oberfläche (25) der verzierten Schicht des Lentikularmaterials dem Formteil der Form zugewandt ist; und
- das Formen von mindestens einem Umfangskanal (7) und einem Vorsprung (8), der im Verhältnis zu einem Mittelabschnitt herausragt und diesen zumindest teilweise umgibt, durch das plastische Verformen der transparenten Schicht zusammen mit der verzierten Schicht, so dass sich die verzierte Schicht zumindest teilweise in den Kanal erstreckt.

8. Verfahren nach Anspruch 7, wobei eine dauerhafte oder abnehmbare Schutzschicht (30) auf die rückwärtige Oberfläche (25) der verzierten Schicht (20) vor dem Formen des mindestens einen Vorsprungs (8) und Kanals (7) aufgetragen wird, um zu verhindern, dass die transparente Schicht (10) und die verzierte Schicht (20) Risse bekommen.

9. Verfahren nach Anspruch 8, wobei eine Lackschicht zum Formen der Schutzschicht (30) aufgetragen wird.

10. Verfahren nach einem der Ansprüche 7 bis 9, das ferner einen Schritt des Extrudierens der Lentikularfolie (40) umfasst.

11. Verfahren nach einem der Ansprüche 7 bis 10, wobei die verzierte Schicht (20) durch Drucken aufgetragen wird.

12. Verfahren nach einem der Ansprüche 7 bis 11, das ferner einen Schritt des Schneidens des Verpackungselements (1) umfasst.

13. Verfahren nach den Ansprüchen 7 bis 12, wobei die Herstellungsschritte des Extrudierens der Lentikularfolie (40), des Auftragens der verzierten Schicht (20), des Auftragens der Schutzschicht (30), des Formens des mindestens einen Vorsprungs und/oder Kanals (7) zumindest teilweise durch ein Inline-Herstellungsverfahren erfolgen.

14. Verfahren nach den Ansprüchen 7 bis 13, wobei das Verpackungselement (1) durch Thermoverformung hergestellt wird.

15. Verpackungseinheit (4) mit einem Lebensmittelprodukt, das mindestens ein Verpackungselement (1) nach den Ansprüchen 1 bis 6 umfasst.

## Revendications

1. Élément d'emballage (1) pour une unité d'emballage (4) d'un produit alimentaire, comprenant :
un côté arrière (3) ;
un côté avant (5) ; et
une feuille lenticulaire (40), comprenant une couche au moins semitransparente (10) ayant une surface avant (12), qui forme une lentille lenticulaire (19) et constitue au moins une partie du côté avant de l'élément d'emballage et une surface arrière (15) ; et
une couche décorée (20) couvrant au moins partiellement la surface arrière (15) de la couche au moins semi-transparente et étant visible à travers la couche au moins semi-transparente ;
**caractérisé en ce que** l'élément d'emballage (1) possède une portion centrale, un canal circonférentiel (7) dans le côté arrière (3) de l'élément d'emballage (1) qui forme une saillie dans le côté avant (5) qui fait saillie par rapport à la portion centrale (7) et l'entoure au moins partiellement ; et
**en ce que** la couche décorée (40) s'étend au moins partiellement dans le canal (7).

2. Élément d'emballage selon la revendication 1, dans lequel la couche transparente (10) constitue le matériau structurel de l'élément d'emballage (1).

3. Élément d'emballage selon l'une des revendications précédentes, dans lequel l'élément d'emballage (1) est un contenant et/ou un couvercle.

4. Élément d'emballage selon l'une des revendications précédentes, comprenant en outre une couche de protection (30) située sur une surface arrière (25) de la couche décorée (20) conçue pour protéger la couche décorée pendant la formation et pour éviter un mouvement relatif entre la couche décorée et la feuille lenticulaire (40).

5. Élément d'emballage selon l'une des revendications précédentes, dans lequel la couche transparente (10) est constituée d'un polymère thermoformable, de préférence PP et/ou PET.

6. Élément d'emballage selon l'une des revendications précédentes, dans lequel la saillie et/ou le canal (7) forment une caractéristique topographique qui est apte à s'accoupler à un autre élément d'emballage, de préférence sur la base d'un raccordement mécanique et/ou par friction.

7. Procédé de production d'un élément d'emballage (1), comprenant les étapes consistant à :
- placer un matériau lenticulaire (40) comprenant une couche transparente (10) et une couche décorée (20) sur un moule, de sorte qu'une surface arrière (25) de la couche décorée du matériau lenticulaire fasse face à la partie de formation du moule ; et
- former au moins un canal circonférentiel (7) et une saillie (8) faisant saillie par rapport à une section centrale et l'entourant au moins partiellement, par déformation plastique de la couche transparente conjointement avec la couche décorée, de sorte que ladite couche décorée s'étende au moins partiellement dans le canal.

8. Procédé selon la revendication 7, dans lequel une couche de protection amovible ou permanente (30) est appliquée sur la surface arrière (25) de la couche décorée (20) avant la formation de l'au moins une saillie (8) et du canal (7) afin d'éviter que la couche transparente (10) et la couche décorée (20) ne craquent.

9. Procédé selon la revendication 8, dans lequel une couche de laque est appliquée pour former la couche de protection (30).

10. Procédé selon l'une des revendications 7 à 9, comprenant en outre l'étape consistant à extruder la feuille lenticulaire (40).

11. Procédé selon l'une des revendications 7 à 10, dans lequel la couche décorée (20) est appliquée par impression.

12. Procédé selon l'une des revendications 7 à 11, comprenant en outre une étape consistant à découper l'élément d'emballage (1).

13. Procédé selon les revendications 7 à 12, dans lequel les étapes de production consistant à extruder la feuille lenticulaire (40), à appliquer la couche décorée (20), à appliquer une couche de protection (30), à former l'au moins une saillie et/ou canal (7) sont réalisées au moins partiellement par un processus de production en ligne.

14. Procédé selon les revendications 7 à 13, dans lequel l'élément d'emballage (1) est produit par thermoformage.

15. Unité d'emballage (4) avec un produit alimentaire, comprenant au moins un élément d'emballage (1) selon les revendications 1 à 6.
